# EUROPEAN PATENT APPLICATION

(11) **EP 1 844 888 A1**
(43) Date of publication of application: **17.10.2007**
(21) Application number: 07105591.7
(22) Date of filing: 04.04.2007
(51) Int. Cl.: B23K 1/00, B23K 9/02, B23K 31/02, B23P 6/00, F01D 5/30, B23K 101/00

(54) **Method for welding superalloys components or repairing a crack in a superalloy component using brazing after welding**

(30) Priority: 13.04.2006 US 402858
(71) Applicant: General Electric Company, Schenectady, NY 12345 (US)
(72) Inventor: Arnett, Michael D., Simpsonville, SC 29681 (US); Nowak, Daniel A., Greenville, SC 29607 (US); Schaeffer, Jon C., Simpsonville, SC 29681 (US)
(74) Representative: Szary, Anne Catherine

(57) **Abstract**

A method of welding superalloy components (10,12) comprises the following steps: (a) forming a weld prep groove (14) at an interface of the components; (b) welding the components using a filler material at ambient temperature; (c) covering the filler material and adjacent surfaces of the components (10,12) with a braze paste (18); and (d) heat treating the components (10,12), the heat treatment including a stress-relief cycle and a braze cycle. A similar process is used to repair a crack in a nickel-based superalloy component.

## Description

### BACKGROUND OF THE INVENTION

This invention relates generally to the welding of superalloys and, particularly, to nickel-based alloys having a high gamma prime content.

Nickel-based superalloys high in gamma prime are highly susceptible to cracking during welding or post-weld heat treatment. This is particularly true when the welds are made using weld fillers with high gamma prime content, and welded at ambient temperature.

One method of addressing this problem is to weld the superalloy at very high temperatures as disclosed, for example, in U.S. Patent No. 5,897,801. Another method utilizes ductile fillers, either for the entire weld or as part of an interlayer. However, these approaches can result in significant degradation of base metal properties.

### BRIEF SUMMARY OF THE INVENTION

In accordance with an exemplary embodiment of this invention, nickel-based or other superalloy components are welded at ambient temperature, and the typical cracking that occurs is accepted. Subsequently, however, the weld surfaces are overlaid with a braze paste or braze paste mixture and the parts are then heat treated. The braze paste may or may not include superalloy powder as a partial constituent. The heat treatment includes a stress relief cycle followed by a braze cycle that repairs any cracks formed during welding or during the stress relief cycle.

Accordingly, in its broader aspects, the present invention relates to a method of welding superalloy components comprising: (a) forming a weld prep groove at facing surfaces of the components; (b) welding the components using a filler material; (c) covering the weld filler material and adjacent surfaces of the components with a braze paste; and (d) heat treating the components.

In another aspect, the invention relates to a method of welding superalloy components comprising: (a) forming a weld prep groove at an interface of the components; (b) welding the components using a high strength filler material at ambient temperature; (c) covering the weld filler material and adjacent surfaces of the components with a braze paste; and (d) heat treating the components in a stress relief cycle followed by a braze cycle.

In still another aspect, the invention relates to a method of repairing a crack in a superalloy component comprising: (a) forming a weld prep groove along the crack; (b) weld-filling the weld prep groove with filler material; (c) covering the weld filler material and adjacent surfaces with a braze paste; and (d) heat treating the component in a stress relief cycle followed by a braze cycle.

The invention will now be described in connection with the drawings identified below.

### BRIEF DESCRIPTION OF THE DRAWINGS

FIGURE 1 is a cross-section of a pair of components prepped for welding;
FIGURE 2 is a cross-section of the components shown in Figure 1, but after welding;
FIGURE 3 is a cross-section similar to claim 2 but wherein the adjacent fusion surfaces are covered with a braze paste; and
FIGURE 4 is a graph of an exemplary heat treatment cycle in accordance with the invention.

### DETAILED DESCRIPTION OF THE INVENTION

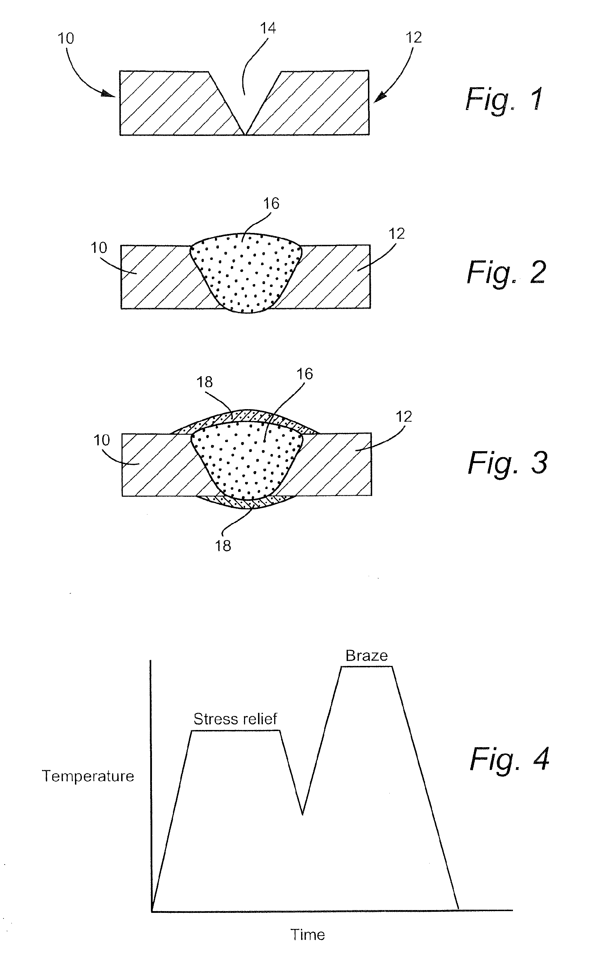

Figure 1 illustrates a pair of nickel-based superalloy components 10, 12 with a V-shaped weld prep notch 14 formed in the facing surfaces of the components. It will be appreciated that a similar weld-prep groove could be formed in a single component having a defect such as a crack to be repaired, with the crack excavated (i.e., routed or machined) to form a V-shaped groove similar to the notch 14.

With reference now to Figure 2, the components 10 and 12 have been welded, with filler material 16 filling the groove 14 and fusing the components 10 and 12 together. Welding may be carried out with any suitable conventional welding technique including gas-tungsten-arc welding, plasma-arc welding and the like. The welding process is implemented at ambient temperature, i.e., above 60°F and not otherwise forcibly heated. Any suitable high strength weld filler material 16, including filler material with high gamma prime content, may be employed. Examples of suitable fillers are Rene 41 and Inconel 738LC.

Subsequently, the surfaces in the fusion zone, i.e., the exposed weld filler surface and adjacent surfaces of the component parts, are covered with a braze paste or braze paste mixture 18. The paste 18 can be either a pure braze alloy, e.g., AMS 4782, or a mixture of e.g., AMS 4782 and a powder of the superalloy Inconel 738.

The welded components are then vacuum-heat-treated in a process that includes both a stress relief cycle and a braze cycle. In this regard, Figure 4 illustrates a suitable heat treatment process indicating that after the stress relief cycle, the component parts are allowed to cool before the temperature is increased to a higher braze temperature which is followed by cooling to ambient temperature. Specific temperature ranges for the two cycles are known to those skilled in the art.

An important aspect of the process is that the weld is permitted to crack initially during or just after welding, but any such crack is "healed" or repaired during the braze cycle of the post-weld heat treatment. The end result is a fused region of the nickel superalloy components that is free of cracks, thus solving the above mentioned problem of welding nickel-based superalloys that are high in gamma prime content.

As mentioned above, a similar process may be utilized to repair a defect such as a crack in a nickel-based or other superalloy component. In this case, the crack is excavated by routing or machining to form a weld prep groove similar to groove 14 (referring to Figures 1-3, components 10 and 12 in this case would be one and the same component). The excavated area is then weld-filled with filler material 16, covered with braze paste (or a braze paste/alloy powder mixture) and heat treated as described above.

While the invention has been described in connection with what is presently considered to be the most practical and preferred embodiment, it is to be understood that the invention is not to be limited to the disclosed embodiment, but on the contrary, is intended to cover various modifications and equivalent arrangements included within the spirit and scope of the appended claims.

## Claims

1. A method of welding superalloy components (10), (12) comprising:
(a) forming a weld prep groove (14) at facing surfaces of the components;
(b) welding the components using a filler material (16) inserted into the weld prep groove (14);
(c) covering the weld filler material and adjacent surfaces of said components with a braze paste (18); and
(d) heat treating the components.

2. The method of claim 1 wherein step (b) is carried out at ambient temperature.

3. The method of claim 1 wherein step (b) is carried out by gas-tungsten-arc or plasma-arc welding.

4. The method of any preceding claim wherein the braze paste (18) comprises a substantially pure braze alloy or a mixture of braze alloy and superalloy powder.

5. The method of any preceding claim wherein step (d) is carried out in a vacuum.

6. The method of any preceding claim wherein step (d) includes a stress relief cycle and a braze cycle.

7. The method of claim 6 wherein the components (10), (12) are cooled after stress relief cycle and before the braze cycle.

8. The method of claim 7 wherein the braze cycle is shorter in time than the stress relief cycle.

9. A method of repairing a crack in a superalloy component (10) or (12) comprising:
(a) forming a weld prep groove (14) along the crack;
(b) weld-filling the weld prep groove with filler material (16);
(c) covering the weld filler material and adjacent surfaces with a braze paste (18); and
(d) heat treating the component in a stress relief cycle followed by a braze cycle.

10. The method of claim 9 wherein the braze paste (18) comprises a substantially pure braze alloy or a mixture of braze alloy and superalloy powder.
